Europäisches Patentamt

European Patent Office

Office européen des brevets

(19)

(11) Veröffentlichungsnummer: **0 266 585**

**A1**

(12) EUROPÄISCHE PATENTANMELDUNG

(21) Anmeldenummer: 87114907.6

(22) Anmeldetag: 13.10.87

(51) Int. Cl.4: **G01P 3/488** , G01D 5/16

(30) Priorität: 14.10.86 DE 3634925

(43) Veröffentlichungstag der Anmeldung:
11.05.88 Patentblatt 88/19

(84) Benannte Vertragsstaaten:
AT BE CH DE ES FR GB IT LI NL SE

(71) Anmelder: NAVSAT GmbH
Am Fuchsberg 8
D-4040 Neuss-Uedesheim(DE)

(72) Erfinder: Blauhut, Reinhold
An der Hartmecke 8
D-5980 Werdohl(DE)

(74) Vertreter: Andrejewski, Walter et al
Patentanwälte Andrejewski, Honke & Partner
Postfach 10 02 54 Theaterplatz 3
D-4300 Essen 1(DE)

(54) Drehzahlmessvorrichtung, insbesondere für Antiblockiervorrichtungen für Fahrzeuge, mit magnetoresistivem Sensor.

(57) Die Erfindung betrifft eine Drehzahlmeßvorrichtung, insbesondere für Antiblockiervorrichtungen für Fahrzeuge, - mit Vorspannmagnet (1), Zahnrad (2) mit Zahnkranz (3) aus ferromagnetischem Material sowie magnetoresistivem Sensor (5) mit vier Sensorelementen (6), die mäanderförmige Leiter aufweisen und in einer elektrischen Brückenschaltung (7) untereinander verschaltet sowie auf einem plättchenförmigen Träger (8) angeordnet sind. Der Sensor (5) besitzt eine Vorzugsrichtung (y) mit hoher Empfindlichkeit und eine Querrichtung (x) geringerer Empfindlichkeit. Das Zahnrad (2) ist in das Magnetfeld des Vorspannmagneten (1) eingesetzt. Der Sensor (5) ist mit Abstand (s) zum Zahnrad (2) fest angeordnet und erfaßt eine magnetische Flußänderung durch Zahnraddrehung. Erfindungsgemäß ist der Sensor (5) an einem Jochblechschenkel (9a, 9b) eines U-förmig gebogenen Blechstreifens (4) aus ferromagnetischem Material angeschlossen. Dieser Blechstreifen (4) trägt den Vorspannmagneten (1) und ist am Umfang des Zahnrades (2) mit auf den Zahnkranz (3) gerichteten Jochblechschenkeln (9a, 9b) angeordnet. Die Jochblechschenkel (9a, 9b) sind in Laufrichtung des Zahnrades (2) ausgerichtet, wobei der Jochblechschenkelabstand (a) dem Zahnspitzenabstand (b) zwischen benachbarten Zähnen des Zahnkranzes (3) oder einem ganzzahligen Vielfachen des Zahnspitzenabstandes (b) entspricht und die Schenkelenden (11) einen Abstand von mehr als 1 mm zum Zahnkranz (3) aufweisen. Der Sensor (5) ist mit der Vorzugsrichtung (y) in Schenkellängsrichtung ausgerichtet. Fernerhin ist an den den Sensor (5) tragenden Jochblechschenkel ein Hilfsblech (14) herangeführt. Dabei ist dem Sensor (5) ein Verzerrungsmagnetfeld aufprägbar, dessen magnetischer Fluß sich der Drehung des Zahnrades (2) entsprechend ändert.

Fig.1

**"Drehzahlmeßvorrichtung, insbesondere für Antiblockiervorrichtungen für Fahrzeuge, mit magnetoresistivem Sensor"**

Die Erfindung betrifft eine Drehzahlmeßvorrichtung, insbesondere für Antiblockiervorrichtungen für Fahrzeuge, - mit Vorspannmagnet, Zahnrad mit Zahnkranz aus ferromagnetischem Material, magnetoresistivem Sensor mit view Sensorelementen, die mäanderförmige Leiter aufweisen und in einer elektrischen Brückenschaltung unterainder verschaltet sowie auf einem plättchenförmigen Träger angeordnet sind, wobei der Sensor eine Vorzugsrichtung (y) mit hoher Empfindlichkeit und eine Querrichtung (x) geringere Empfindlichkeit aufweist, wobei das Zahnrad in das Magnetfeld des Vorspannmagneten eingesetzt ist und wobei der Sensor mit Abstand zum Zahnrad fest angeordnet ist und eine magnetische Flußänderung durch Zahnraddrehung erfaßt. - Die Meßvorrichtung dient zur Drehzahlmessung an ortierenden Maschinenteilen beispielsweise an Werkzeugmaschinen. Die bevorzugte Anwendung ist jedoch der Einsatz in Antiblockiervorrichtungen für Fahrzeuge. Das der Drehzahlmeßvorrichtung zugeordnete Zahnrad ist an das zu überwachende Maschinenteil fest angeschlossen. Im Rahmen der Erfindung liegt es, daß das Zahnrad zu einem Zahnkranz entartet ist, der in das zu überwachende Maschinenteil eingearbeitet ist.

Magnetoresistive Sensoren arbeiten nach dem sogenannten magnetoresistiven Effekt, bei dem sich der elektrische Widerstand eines Leiters mit einem auf ihn wirkenden magnetischen Feld ändert. Magnetoresistive Sensoren sind an sich bekannt. Aus einer älteren, nicht vorveröffentlichten Anmeldung der Anmelderin ist eine Drehzahlmeßvorrichtung bekannt, die mit einem magnetoresistiven Sensor ausgebildet ist. Im Rahmen der bekannten Maßnahmen ist der Sensor mit Abstand zum Zahnrad am Umfang des Zahnkranzes angeordnet und mit der Vorzugsrichtung in Bewegungsrichtung des Zahnkranzes ausgerichtet. Auf dem Sensor ist in Querrichtung dazu ein Vorspannmagnet angeordnet, der um ein Asymmetriemaß gegenüber der in Vorzugsrichtung weisenden Mittelachse des Sensors versetzt ist. Mit der bekannten Vorrichtung ist prinzipiell ein Nutzsignal ausreichender Größe auch dann erreichbar, wenn die Zahnfolgefrequenz klein ist. Bei großem Abstand allerdings ist die Verzerrung des Magnetfeldes am Sensor und damit dessen Empfindlichkeit noch verbesserungsbedürftig.

Der Erfindung liegt die Aufgabe zugrunde, das bei großem Abstand des Meßkopfes vom Zahnkranz erreichbare Nutzsignal der Drehzahlmeßvorrichtung weiter zu verbessern.

Zur Lösung dieser Aufgabe lehrt die Erfindung, daß der Sensor an einem Jochblechschenkel eines U-förmig gebogenen Blechstreifens aus ferromagnetischem Material angeschlossen ist, wobei der Bleckstreifen den Vorspannmagneten trägt und am Umfang des Zahnrades mit auf den Zahnkranz gerichteten Jochblechschenkeln angeordnet ist, daß die Jochblechschenkel in Laufrichtung des Zahnrades ausgerichtet sind, wobei der Jochblechschenkelabstand dem Zahnspitzenabstand zwischen benachbarten Zähnen des Zahnkranzes oder einem ganzzahligen Vielfachen des Zahnspitzenabstandes entspricht und die Schenkelenden einen Abstand von mehr als 1 mm zum Zahnkranz aufweisen, daß der Sensor mit der Vorzugsrichtung (y) in Schenkellängsrichtung ausgebildet ist, und daß an den den Sensor tragenden Jochblechschenkel ein Hilfsblech herangeführt ist, wobei dem Sensor ein Verzerrungsmagnetfeld aufprägbar ist, dessen magnetischer Fluß sich der Drehung des Zahnrades entsprechend ändert. - Erfindungsgemäß ist dem magnetischen Nutzfeld, das dem Jochblechschenkel zugeordnet ist, im Bereich des Sensors ein Verzerrungsmagnetfeld aufprägbar. Wegen der kleineren Luftspaltverhältnisse ist die dem Verzerrungsmagnetfeld zugeordnete Vorspannkomponente unter allen Umständen größer als die Nutzsignalkomponente, so daß ein "Umklappen des Signals" ausgeschlossen ist. Wenn die Jochblechschenkel durch das ferromagnetische Material des Zahnkranzes einem veränderten magnetischen Fluß ausgesetzt werden, so bewirkt dies eine Verzerrung der Feldverhältnisse am Sensor zwischen dem Verzerrungsmagnetfeld und dem magnetischen Nutzfeld. Dadurch werden die zu einer Brücke verschalteten Sensorelemente mit unterschiedlichen Feldern beaufschlagt, wobei die Brücke weiter verstimmt wird und an den Ausgängen eine Verschiebung der Differenzspannung entsteht.

Eine Vorspannung des Sensors ergibt sich auch durch asymmetrische Anordnung des Sensors am Jochblechschenkel. In der bevorzugten Ausführungsform der Erfindung ist daher vorgesehen, daß der Sensor bündig in eine Ausnehmung des Jochblechschenkels eingesetzt ist, die zu einer Stirnseite des Jochblechschenkels offen ist. Als zweckmäßig hat es sich erwiesen, wenn die Tiefe der Ausnahmungen etwa 8/10 der Jochblechbreite entspricht. Zur weiteren Ausgestaltung der Anordnumg des Hilfsblechs lehrt die Erfindung, daß das Hilfsblech mit engem Spalt an die Oberfläche der Sensorelemente herangeführt ist. Eine konstruktive Ausgestaltung der Drehzahlmeßvorrichtung, die sich durch besonders große Empfindlichkeit auszeichnet, ist dadurch gekennzeichnet, daß der Vorspannmagnet zwischen den beiden Jochblechschenkeln des U-förmig gebogenen Blechstreifens angeordnet und ein Pol des Vorspannmagneten an dem den Sensor tragenden Jochblechschenkel angeschlossen ist und daß der Gegenpol mit dem Hilfsblech verbunden ist. Eine in schaltungstechnischer Hinsicht günstige Ausführung ergibt sich, wenn der Vorspannmagnet ein statisches Magnetfeld aufweist. Dies kann ein Elektromagnet sein. Die bevorzugte Ausführung sieht jedoch vor, daß der Vorspannmagnet ein Permanentmagnet ist. Da die magnetoresistiven Sensoren einer gewissen Temperaturabhängigkeit ihres Nullpunktes unterliegen, empfiehlt die Erfindung, daß der Brückenschaltung der Sensorelemente eine Serienschaltung aus Siliciumdiode und Widerstand zur Temperaturkompensation zugeordnet ist. Überraschenderweise hat sich gezeigt, daß mit der sehr einfachen Temperaturkompensationsschaltung eine gute Kompensation der Temperaturabhängigkeit in einem großen Temperaturbereich erreichbar ist. Dies ist darauf zurückzuführen, daß die Nutzsignale mit großer Amplitude zur Verfügung stehen. Eine andere Ausgestaltung der Erfindung sieht vor, daß der Vorspannmagnet ein hochfrequentes Wechselfeld aufweist. In diesem Fall ist das Nutzsignal ein amplitudenmoduliertes Hochfrequenzsignal, welches demoduliert werden muß. Die elektrische Schaltung mit hochfrequenter Quelle und Demodulationseinrichtung ist insgesamt technisch aufwendiger. Der Vorteil dieser Lösung liegt darin, daß keine Temperaturkompensation notwendig ist. Unabhängig davon, ob der Vorspannmagnet ein statisches Magnetfeld oder ein hochfrequentes Wechselfeld aufweist, ist ein großer Abstand zwischen den Schenkelenden und dem Zahnkranz einstellbar. Die bevorzugte Ausführungsform der Erfindung sieht vor, daß der Abstand mehr als 2,5 mm aufweist.

Die erfindungsgemäße Drehzahlmeßvorrichtung weist alle aus der älteren Anmeldung der Anmelderin bekannten Vorteile auf. Die Meßvorrichtung ist mit geringem Schaltungsaufwand realisierbar. Sie ist temepraturbeständig und arbeitet auch bei großem Abstand des Meßkopfes vom rotierenden Maschinenteil betriebssicher. Die erfindungsgemäße Meßvorrichtung zeichnet sich darüber hinaus durch ein noch größeres Nutzsignal bei vorgegebenem Abstand des Meßkopfes zum Zahnrad und vorgegebener Zahnfolgefrequenz aus. Im Ergebnis zeigt die Drehzahlmeßvorrichtung eine gute Meßgenauigkeit und einen großen Meßbereich und eignet sich insbesondere zum Einsatz von Antiblockiervorrichtungen für Fahrzeuge.

Im folgenden wird die Erfindung anhand einer lediglich ein Ausführungsbeispiel darstellenden Zeichnung ausführlicher erläutert. Es zeigen in - schematischer Darstellung

Fig. 1 die Drehzahlmeßvorrichtung in einer Seitenansicht,

Fig. 2 die Drehzahlmeßvorrichtung in einer gegenüber der Fig. 1 um 90° gedrehten Ansicht,

Fig. 3 eine elektrische Schaltungsanordnung der Drehzahlmeßvorrichtung.

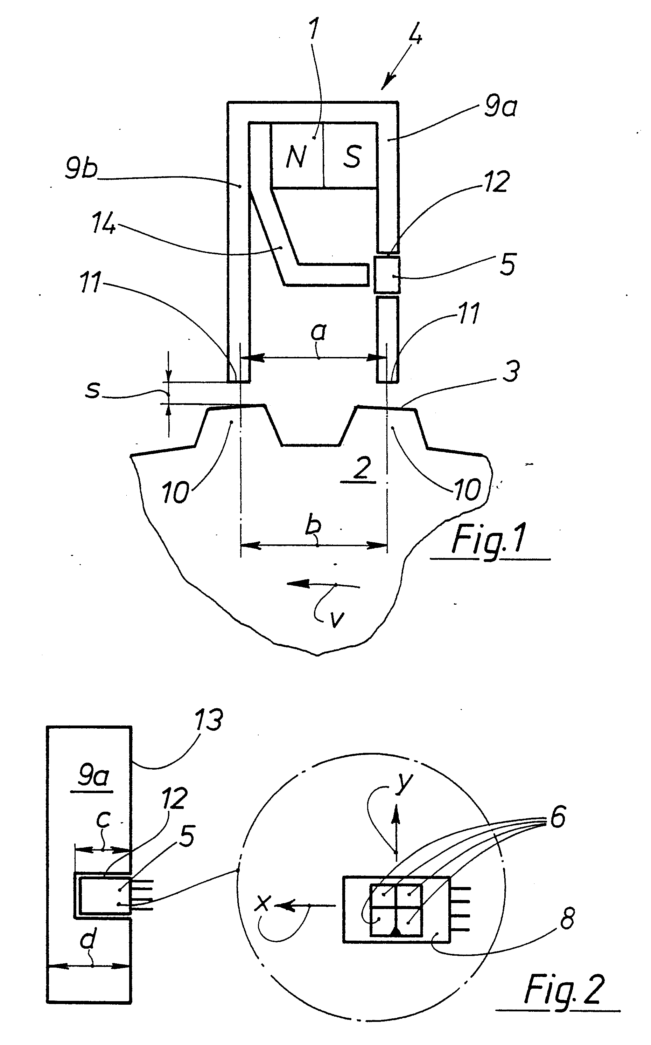

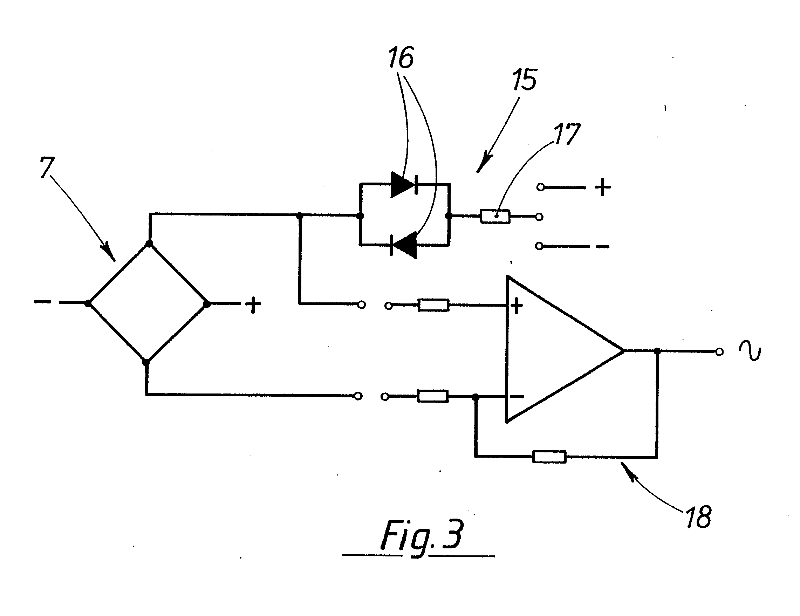

Die in den Fig. 1 bis 3 dargestellte Drehzahlmeßvorrichtung dient der Messung von Drehzahlen an rotierenden Maschinenteilen. Der bevorzugte Anwendungsfall ist der Einsatz in Antiblockiervorrichtungen für Fahrzeuge. Zum grundsätzlichen Aufbau gehören ein Vorspannmagnet 1, ein Zahnrad 2 mit Zahnkranz 3 aus ferromagnetischem Material, ein U förmig gebogener Blechstreifen 4 aus ferromagnetischem Material sowie ein magnetorestistiver Sensor 5. Der Sensor 5 weist vier Sensorelemente 6 auf, die mäanderförmige Leiter aufweisen und in einer elektrischen Brückenschaltung 7 untereinander verschaltet sowie auf einem plättchenförmigen Träger 8 angeordnet sind. Der Sensor 5 arbeitet nach dem sogenannten magnetoresistiven Effekt, bei dem sich der Widerstand eines Leiters mit einem auf ihn wirkenden magnetischen Feld ändert. Er besitzt eine Vorzugsrichtung y mit hoher Empfindlichkeit und eine Querrichtung x geringerer Empfindlichkeit.

Der Vorspannmagnet 1 ist an den U-förmig gebogenen Blechsteifen 4 angeschlossen (Fig. 1). Der Blechstreifen 4 ist am Umfang des Zahnrades 2 mit auf den Zahnkranz 3 gerichteten Jochblechschenkeln 9a, 9b angeordnet. Die Jochblechschenkel 9a, 9b sind in Laufrichtung v des Zahnrades 1 ausgerichtet. Der Jochblechschenkelabstand a entspricht dem Zahnspitzenabstand b zwischen benachbarten Zähnen 10 des Zahnkranzes 3. Prinzipiell kann der Jochblechschenkelabstand a aber auch ein ganzzahliges Vielfaches des Zahnspitzenabstandes b betragen. Die Schenkelenden 11 der Jochblechschenkel 9a, 9b weisen gegenüber dem Zahnkranz 3 einen Abstand s von mehr als 1 mm, vorzugsweise von mehr als 2,5 mm, auf.

Der Sensor 5 ist an einem Jochblechschenkel 9a des U-förmig gebogenen Blechstreifens 4 angeschlossen. Aus Fig. 2 ist ersichtlich, daß er bündig in eine Ausnehmung 12 des Jochblechschenkels 9a eingesetzt ist, die zu einer Stirnseite 13 des Jochblechschenkels 9a offen ist. Im Ausführungsbeispiel mag die Tiefe c der Ausnehmung ... bis ... der Jochblechschenkelbreite d betragen. Der Sensor 5 ist dabei mit seiner Vorzugsrichtung y in Längsrichtung des Jochblechschenkels ausgerichtet. Der Fig. 1 entnimmt man fernerhin, daß der Vorspannmagnet 1 zwischen den beiden Jochblechschenkeln 9a, 9b des U-förmig gebogenen Blechstreifens 4 angeordnet ist. Ein Pol S des Vorspannmagneten ist an dem Jochblechschenkel 9a angeschlossen, der den Sensor 5 trägt. Der Gegenpol N ist mit einem Hilfsblech 14 verbunden, das mit engem Spalt an die Oberfläche der Sensorelemente 6 herangeführt ist. Der Vorspannmagnet 1 ist im Ausführungsbeispiel ein Permanentmagnet. Prinzipiell ist auch die Verwendung eines Elektromagneten möglich.

**Ansprüche**

1. Drehzahlmeßvorrichtung, insbesondere für Antiblockiervorrichtungen für Fahrzeuge, - mit Vorspannmagnet,

Zahnrad mit Zahnkranz aus ferromagnetischem Material,

magnetoresistivem Sensor mit vier Sensorelementen, die mäanderförmige Leiter aufweisen und in einer elektrischen Brückenschaltung untereinander verschaltet sowie auf einem plättchenförmigen träger angeordnet sind,

wobei der Sensor eine Vorzugsrichtung (y) mit hoher Empfindlichkeit und eine Querrichtung (x) geringerer Empfindlichkeit aufweist, wobei das Zahnrad in das Magnetfeld des Vorspannmagneten eingesetzt ist und wobei der Sensor mit Abstand zum Zahnrad fest angeordnet ist und eine magnetische Flußänderung durch Zahnraddrehung erfaßt, **dadurch gekennzeichnet,** daß der Sensor (5) an einem Jochblechschenkel (9a) eines U-förmig gebogenen Blechstreifens (4) aus ferromagnetischem Material angeschlossen ist,

wobei der Blechstreifen (4) den Vorspannmagneten (1) trägt und am Umfang des Zahnrades (2) mit auf den Zahnkranz (3) gerichteten Jochblechschenkeln (9a, 9b) angeordnet ist,

daß die Jochblechschenkel (9a, 9b) in Laufrichtung (v) des Zahnrades (2) ausgerichtet sind, wobei der Jochblechschenkelabstand (a) dem Zahnspitzenabstand (b) zwischen benachbarten Zähnen (10) des Zahnkranzes (3) oder einem ganzzahligen Vielfachen des Zahnspitzenabstandes (b) entspricht und die Schenkelenden (11) einen Abstand (s) von mehr als 1 mm zum Zahnkranz (3) aufweisen, daß der Sensor (5) mit der Vorzugsrichtung (y) in Schenkellängsrichtung ausgerichtet ist, und daß an den den Sensor (5) tragenden Jochblechschenkel (9a) ein Hilfsblech (14) herangeführt ist, wobei dem Sensor (5) ein Verzerrungsmagnetfeld aufprägbar ist, dessen magnetischer Fluß sich der Drehung des Zahnrades (2) entsprechend ändert.

2. Meßvorrichtung nach Anspruch 1, daudrch gekennzeichnet, daß der Sensor (5) bündig in eine Ausnehmung (12) des Jochblechschenkels (9a) eingesetzt ist, die zu einer Stirnseite (13) des Jochblechschenkels (9a) offen ist.

3. Meßvorrichtung nach Anspruch 2, dadurch gekennzeichnet, daß die Tiefe (c) der Ausnahmung (12) etwa 8/10 der Jochblechschenkelbreite (d) entspricht.

4. Meßvorrichtung nach einem der Ansprüche 1 bis 3, dadurch gekennzeichnet, daß das Hilfsblech (14) mit engem Spalt an die Oberfläche der Sensorelemente (6) herangeführt ist.

5. Meßvorrichtung nach einem der Ansprüche 1 bis 4, dadurch gekennzeichnet, daß der Vorspannmagnet (1) zwischen den beiden Jochblechschenkeln (9a, 9b) des U-förmig gebogenen Blechstreifens (4) angeordnet ist und ein Pol (S) des Vorspannmagneten (1) an dem den Sensor (5) tragenden Jochblechschenkel (9a) angeschlossen ist, and daß der Gegenpol (N) mit dem Hilfsblech (14) verbunden ist.

6. Meßvorrichtung nach einem der Ansprüche 1 bis 5, dadurch gekennzeichnet, daß der Vorspannmagnet (1) ein statisches Magnetfeld aufweist.

7. Meßvorrichtung nach Anspruch 6, dadurch gekennzeichnet, daß der Vorspannmagnet (1) ein Permanentmagnet ist.

8. Meßvorrichtung nach Anspruch 6 oder 7, dadurch gekennzeichnet, daß der Brückenschaltung (7) der Sensorelemente (6) eine Serienschaltung (15) aus Siliciumdiode (16) und Widerstand (17) zur Temperaturkompensation zugeordnet ist.

9. Meßvorrichtung nach einem der Ansprüche 1 bis 5, dadurch gekennzeichnet, daß der Vorspannmagnet (1) ein hochfrequentes Wechselfeld aufweist.

10. Meßvorrichtung nach einem der Ansprüche 1 bis 9, dadurch gekennzeichnet, daß der Abstand (s) zwischen den Schenkelenden und dem Zahnkranz (3) mehr als 2,5 mm aufweist.

*Fig.1*

*Fig.2*

65609

65609

*Fig.3*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 739 877 (NESTLER GmbH)<br>* Seite 7, Zeile 11 - Seite 8, Zeile 2; Figur 1 *<br>--- | 1,2,6,7 | G 01 P 3/488<br>G 01 D 5/16 |
| A | SIEMENS-BAUTEILE-INFORMATIONEN, Band 6, Nr. 5, Oktober 1968, Seiten 172,176, München; U. EBERHARDT et-al.: "Anwendung von Feldplatten beim elektrischen Messen nichtelektrischer Grössen"<br>* Seite 176, Spalte 1, Zeile 23 - Seite 176, Spalte 2, Zeile 7; Figur 13c *<br>--- | 1,4,6,7 | |
| A | DE-B-1 303 222 (SIEMENS)<br>* Spalte 1, Zeile 67 - Spalte 2, Zeile 13; Figur 1 *<br>----- | 1,4,6,7 | |

| RECHERCHIERTE SACHGEBIETE (Int. Cl.4) |
|---|
| G 01 P<br>G 01 D |

Der vorliegende Recherchenbericht wurde für alle Patentansprüche erstellt

| Recherchenort | Abschlußdatum der Recherche | Prüfer |
|---|---|---|
| DEN HAAG | 29-01-1988 | HANSEN P. |